(19) Europäisches Patentamt
European Patent Office
Office européen des brevets

(11) **EP 1 842 283 B1**

(12) **EUROPÄISCHE PATENTSCHRIFT**

(45) Veröffentlichungstag und Bekanntmachung des Hinweises auf die Patenterteilung:
**04.02.2009 Patentblatt 2009/06**

(21) Anmeldenummer: **05740408.9**

(22) Anmeldetag: **24.05.2005**

(51) Int Cl.:
**H02M 7/53** (2006.01)   **H02M 1/12** (2006.01)

(86) Internationale Anmeldenummer:
**PCT/CH2005/000292**

(87) Internationale Veröffentlichungsnummer:
**WO 2006/079225 (03.08.2006 Gazette 2006/31)**

(54) **VERFAHREN UND VORRICHTUNG ZUM BETRIEB EINER UMRICHTERSCHALTUNG MIT EINEM LCL-FILTER**

METHOD AND DEVICE FOR THE OPERATION OF A CONVERTER CIRCUIT COMPRISING AN LCL FILTER

PROCEDE ET DISPOSTIF POUR L'OPERATION D'UN CIRCUIT CONVERTISSEUR AVEC UN FILTRE LCL

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **25.01.2005 US 646504 P**

(43) Veröffentlichungstag der Anmeldung:
**10.10.2007 Patentblatt 2007/41**

(73) Patentinhaber: **ABB Schweiz AG**
**5400 Baden (CH)**

(72) Erfinder:
  • **PONNALURI, Srinivas**
    **CH-5417 Untersiggenthal (CH)**
  • **SERPA, Leonardo**
    **CH-8057 Zürich (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**US-A- 5 942 876**

• **KOCZARA W ET AL: "Clean reactive power compensator" IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002, ANNUAL CONFERENCE OF THE IEEE INDUSTRIAL ELECTRONICS SOCIETY, NEW YORK, NY : IEEE, US, Bd. VOL. 1 OF 4. CONF. 28, 5. November 2002 (2002-11-05), Seiten 2951-2956, XP010707719 ISBN: 0-7803-7474-6**
• **LINDGREN M ET AL: "Control of a voltage-source converter connected to the grid through an LCL-filter-application to active filtering" POWER ELECTRONICS SPECIALISTS CONFERENCE, 1998. PESC 98 RECORD. 29TH ANNUAL IEEE FUKUOKA, JAPAN 17-22 MAY 1998, NEW YORK, NY, USA,IEEE, US, Bd. 1, 17. Mai 1998 (1998-05-17), Seiten 229-235, XP010294951 ISBN: 0-7803-4489-8**
• **BUENO E J ET AL: "Current control of voltage source converters connected to the grid through an LCL-filter" POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, 20. Juni 2004 (2004-06-20), Seiten 68-73Vol1, XP010737970 ISBN: 0-7803-8399-0**

## Beschreibung

### Technisches Gebiet

Die Erfindung bezieht sich auf das Gebiet der Leistungselektronik. Sie geht aus von einem Verfahren zum Berieb einer Umrichterschaltung sowie einer Vorrichtung zur Durchführung des Verfahrens gemäss dem Oberbegriff der unabhängigen Ansprüche.

### Stand der Technik

Herkömmliche Umrichterschaltungen umfassen eine Umrichtereinheit mit einer Vielzahl an ansteuerbaren Leistungshalbleiterschaltern, welche in bekannter Weise zur Schaltung von mindestens zwei Schaltspannungsniveaus verschaltet sind. An jedem Phasenanschluss der Umrichtereinheit ist ein LCL-Filter angeschlossen (siehe "Clean Reactive Power Compensator" von W. Koczara und J. Matraszek IEEE Annual Conf. of Industrial Electronics Society, IECON-2002, Nov. 2002, PP2951-2956). Mit der Umrichtereinheit ist ferner ein kapazitiver Energiespeicher verbunden, welcher gängigerweise durch einen oder mehrere Kondensatoren gebildet ist. Für den Betrieb der Umrichterschaltung ist eine Vorrichtung vorgesehen, welche eine Regelungseinrichtung zur Erzeugung eines Hysteresewirkleistungswertes, eines Hystereseblindleistungswert und eines ausgewählten Flusssektors aufweist, die über eine Ansteuerschaltung zur Bildung eines Ansteuersignals aus dem Hysterese-wirkleistungswert, dem Hystereseblindleistungswert und dem ausgewählten Flusssektor mit den ansteuerbaren Leistungshalbleiterschaltern verbunden ist. Mittels des Ansteuersignals werden somit die Leistungshalbleiterschalter angesteuert.

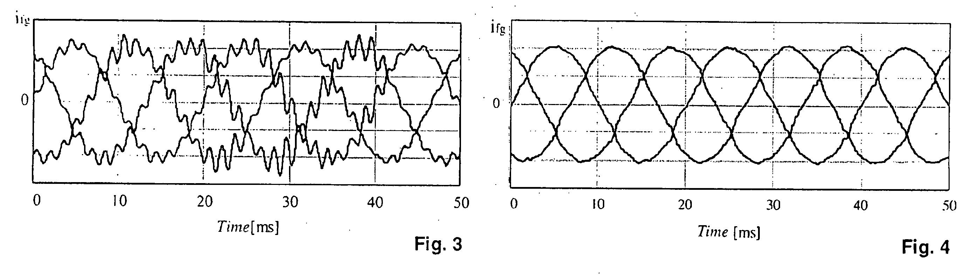

Problematisch bei einer vorstehend genannten Umrichterschaltung ist, dass die LCL-Filter eine dauerhafte Verzerrung, d.h. unerwünschte Schwingungen, in den Filterausgangsströmen und Filterausgangsspannungen aufgrund von resonanten Schwingungen der LCL-Filter verursachen können, wie in einem gängigen zeitliche Verlauf von Filterausgangsströmen gemäss Fig. 3 gezeigt ist. In einem typischerweise an die Filterausgänge angeschlossenen elektrischen Wechselspannungsnetz oder bei einer an die Filterausgänge angeschlossenen elektrischen Last können solche Verzerrungen zu Beschädigungen oder gar Zerstörungen führen und sind damit in höchstem Masse unerwünscht.

### Darstellung der Erfindung

Aufgabe der Erfindung ist es deshalb, ein Verfahren zum Betrieb einer Umrichterschaltung anzugeben, mittels welchem durch an die Umrichterschaltung angeschlossene LCL-Filter verursachte Verzerrungen in den Filterausgangsströmen und Filterausgangsspannungen aktiv gedämpft werden können. Ferner ist es die Aufgabe der Erfindung, eine Vorrichtung anzugeben, mit der das Verfahren in besonders einfacher Weise durchgeführt werden kann. Diese Aufgaben werden durch die Merkmale des Anspruchs 1 bzw. des Anspruchs 9 gelöst. In den abhängigen Ansprüchen sind vorteilhafte Weiterbildungen der Erfindung angegeben.

Die Umrichterschaltung weist eine Umrichtereinheit mit einer Vielzahl an ansteuerbaren Leistungshalbleiterschaltern und ein an jedem Phasenanschluss der Umrichtereinheit angeschlossenes LCL-Filter auf. Beim erfindungsgemässen Verfahren zum Betrieb der Umrichterschaltung werden nun die ansteuerbaren Leistungshalbleiterschalter mittels eines aus einem Hysteresewirkleistungswert, aus einem Hystereseblindleistungswert und aus einem ausgewählten Flusssektor gebildeten Ansteuersignals angesteuert. Erfindungsgemäss wird der Hysteresewirkleistungswert aus einem Differenzwirkleistungswert mittels eines ersten Hysteresereglers gebildet und der Differenzwirkleistungswert aus der Subtraktion eines geschätzten Wirkleistungswertes und eines Dämpfungswirkleistungswertes von einem Referenzwirkleistungswert gebildet, wobei der Dämpfungswirkleistungswert aus einer mit einem einstellbaren Dämpfungsfaktor gewichteten Summe von einer Multiplikation der $\alpha$-Komponente der Raumzeigertransformation von Filterkapazitätsströmen der LCL-Filter mit einer $\alpha$-Komponente der Raumzeigertransformation von Phasenanschlussströmen und einer Multiplikation einer $\beta$-Komponente der Raumzeigertransformation von Filterkapazitätsströmen der LCL-Filter mit der $\beta$-Komponente der Raumzeigertransformation von Phasenanschlussströmen gebildet wird. Ferner wird der Hystereseblindleistungswert aus einem Differenzblindleistungswert mittels eines zweiten Hysteresereglers gebildet und der Differenzblindleistungswert aus der Subtraktion eines geschätzten Blindleistungswertes und eines Dämpfungsblindleistungswertes von einem Referenzblindleistungswert gebildet, wobei der Dämpfungsblindleistungswert aus einer mit dem einstellbaren Dämpfungsfaktor gewichteten Differenz von einer Multiplikation der $\beta$-Komponente der Raumzeigertransformation von Filterkapazitätsströmen der LCL-Filter mit der $\alpha$-Komponente der Raumzeigertransformation von Phasenanschlussströmen und einer Multiplikation der $\alpha$-Komponente der Raumzeigertransformation von Filterkapazitätsströmen der LCL-Filter mit der $\beta$-Komponente der Raumzeigertransformation von Phasenanschlussströmen gebildet wird.

Durch den Dämpfungswirkleistungswert und den Dämpfungsblindleistungswert können vorteilhaft Verzerrungen, d.h. unerwünschte Schwingungen, in den Filterausgangsströmen und Filterausgangsspannungen aktiv gedämpft werden, so dass diese Verzerrungen stark reduziert werden und bestenfalls weitestgehend unterdrückt werden. Ein weiterer Vorteil des erfindungsgemässen Verfahrens liegt darin, dass kein diskreter, platzraubender, aufwendig realisierter und damit teurer Dämpfungswiderstand an den jeweiligen Phasenanschluss angeschlossen werden muss, um die unerwünschten Verzerrungen effektiv dämpfen zu können.

Die erfindungsgemässe Vorrichtung zur Durchführung des Verfahrens zum Betrieb der Umrichterschaltung weist eine der Erzeugung eines Hysteresewirkleistungswertes, eines Hystereseblindleistungswertes und eines ausgewählten Flusssektors dienende Regelungseinrichtung auf, die über eine Ansteuerschaltung zur Bildung eines Ansteuersignals mit den ansteuerbaren Leistungshalbleiterschaltern verbunden ist. Erfindungsgemäss umfasst die Regelungseinrichtung eine erste Berechnungseinheit zur Bildung des Hysteresewirkleistungswertes, des Hystereseblindleistungswertes und des ausgewählten Flusssektors, wobei die erste Berechnungseinheit einen ersten Hystereseregler zur Bildung des Hysteresewirkleistungswertes aus einem Differenzwirkleistungswert, einen zweiten Hystereseregler zur Bildung des Hystereseblindleistungswertes aus einem Differenzblindleistungswert und einen Vektorzuordner zur Bildung des ausgewählten Flusssektors aufweist. Ferner umfasst die Regelungseinrichtung einen ersten Summierer zur Bildung des Differenzwirkleistungswertes aus der Subtraktion eines geschätzten Wirkleistungswertes und eines Dämpfungswirkleistungswertes von einem Referenzwirkleistungswert und einen zweiten Summierer zur Bildung des Differenzblindleistungswertes aus Subtraktion eines geschätzten Blindleistungswertes und eines Dämpfungsblindleistungswertes von einem Referenzblindleistungswert. Darüber hinaus umfasst die Regelungseinrichtung eine zweite Berechnungseinheit zur Bildung des Dämpfungswirkleistungswertes und des Dämpfungsblindleistungswertes, wobei der Dämpfungswirkleistungswert aus einer mit einem einstellbaren Dämpfungsfaktor gewichteten Summe von einer Multiplikation einer $\alpha$-Komponente der Raumzeigertransformation von Filterkapazitätsströmen der LCL-Filter mit einer $\alpha$-Komponente der Raumzeigertransformation von Phasenanschlussströme und einer Multiplikation einer $\beta$-Komponente der Raumzeigertransformation von Filterkapazitätsströmen der LCL-Filter mit einer $\beta$-Komponente der Raumzeigertransformation von Phasenanschlussströme gebildet ist. Der Dämpfungsblindleistungswert ist weiterhin aus einer mit dem einstellbaren Dämpfungsfaktor gewichteten Differenz von einer Multiplikation der $\beta$-Komponente der Raumzeigertransformation von Filterkapazitätsströmen der LCL-Filter mit der $\alpha$-Komponente der Raumzeigertransformation von Phasenanschlussströme und einer Multiplikation der $\alpha$-Komponente der Raumzeigertransformation von Filterkapazitätsströmen der LCL-Filter mit der $\beta$-Komponente der Raumzeigertransformation von Phasenanschlussströme gebildet ist.

Die erfindungsgemässe Vorrichtung zur Durchführung des Verfahrens zum Betrieb der Umrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1 eine Ausführungsform einer erfindungsgemässen Vorrichtung zur Durchführung des erfindungsgemässen Verfahrens zum Betrieb einer Umrichterschaltung,

Fig. 2 eine Ausführungsform einer siebten Berechnungseinheit,

Fig. 3 ein gängiger zeitlicher Verlauf der Filterausgangsströme und

Fig. 4 ein zeitlicher Verlauf der Filterausgangsströme mit aktiver Dämpfung nach dem erfindungsgemässen Verfahren.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

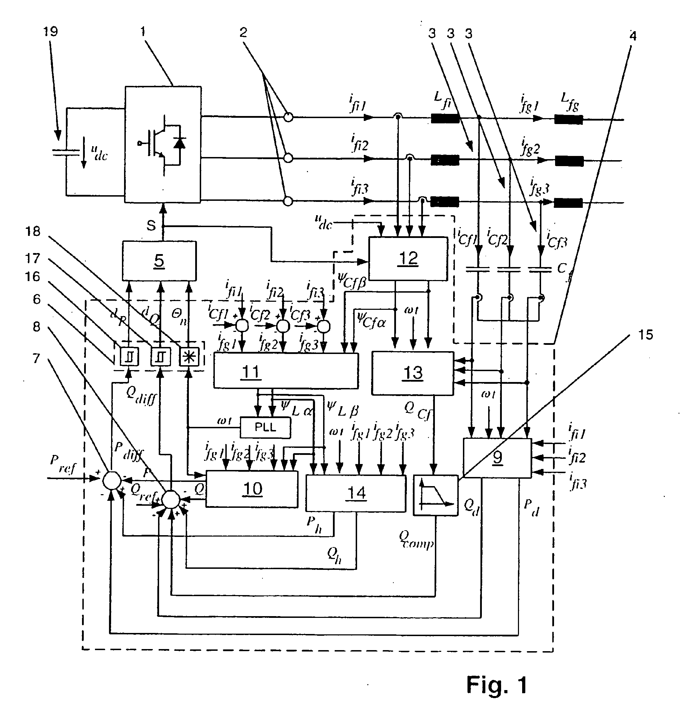

In Fig. 1 ist eine Ausführungsform einer erfindungsgemässen Vorrichtung zur Durchführung des erfindungsgemässen Verfahrens zum Betrieb einer Umrichterschaltung gezeigt. Die Umrichterschaltung weist gemäss Fig. 1 eine Umrichtereinheit 1 mit einer Vielzahl an ansteuerbaren Leistungshalbleiterschaltern und ein an jedem Phasenanschluss 2 der Umrichtereinheit 1 angeschlossenes LCL-Filter 3 auf. Demnach weist jedes LCL-Filter 3 eine erste Filterinduktivität $L_{fi}$, eine zweite Filterinduktivität $L_{fg}$ sowie eine Filterkapazität $C_f$ auf, wobei die erste Filterinduktivität $L_{fi}$ mit dem zugehörigen Phasenanschluss 2 der Umrichtereinheit 1, mit der zweiten Filterinduktivität $L_{fg}$ und mit der Filterkapazität $C_f$ verbunden ist. Weiterhin sind die Filterkapazitäten $C_f$ der einzelnen LCL-Filter 3 miteinander verbunden. In Fig. 1 ist die Umrichtereinheit 1 beispielhaft dreiphasig ausgeführt. Es sei erwähnt, dass die Umrichtereinheit 1 allgemein als jedwede Umrichtereinheit 1 zur Schaltung von $\geq 2$ Schaltspannungsniveaus (Multi-Level-Umrichterschaltung) bezüglich der Spannung eines mit der Umrichtereinheit 1 verbundenen kapazitiven Energiespeichers 19 ausgebildet sein kann, wobei dann der kapazitive Energiespeicher 19 durch eine beliebige Anzahl an Kapazitäten gebildet ist, welche Kapazitäten dann angepasst an die entsprechend ausgeführte Teilumrichterschaltung verschaltet sind.

Beim erfindungsgemässen Verfahren zum Betrieb der Umrichterschaltung werden nun die ansteuerbaren Leistungshalbleiterschalter der Umrichtereinheit 1 mittels eines aus einem Hysteresewirkleistungswert $d_P$, aus einem Hystereseblindleistungswert $d_Q$ und aus einem ausgewählten Flusssektor $\theta_n$ gebildeten Ansteuersignals S angesteuert werden. Zur Bildung des Ansteuersignals dient gängigerweise eine Zuordnungstabelle (look-up table), bei welcher Hysteresewirkleistungswerte $d_P$, Hystereseblindleistungswerte $d_Q$ und ausgewählten Flusssektoren $\theta_n$ entsprechenden Ansteuersignalen S fest zugeordnet sind, oder ein Modulator, welcher auf der Pulsweitenmodulation basiert. Erfindungsgemäss wird der Hysteresewirkleistungswert $d_P$ aus einem Differenzwirkleistungswert $P_{diff}$ mittels eines ersten Hysteresereglers 16, wie in Fig. 1 gezeigt, gebildet. Weiterhin wird der Differenzwirkleistungswert $P_{diff}$ aus der Subtraktion eines geschätzten Wirkleistungswertes $P$ und eines Dämpfungswirkleistungswertes $P_d$ von einem Referenzwirkleistungswert $P_{ref}$ gebildet, wobei der Dämpfungswirkleistungswert $P_d$ aus einer mit einem einstellbaren Dämpfungsfaktor $k_d$ gewichteten Summe von einer Multiplikation einer $\alpha$-Komponente der Raumzeigertransformation von Filterkapazitätsströmen $i_{Cf\alpha}$ der LCL-Filter 3 mit einer $\alpha$-Komponente der Raumzeigertransformation von Phasenanschlussströmen $i_{fi\alpha}$ und einer Multiplikation einer $\beta$-Komponente der Raumzeigertransformation von Filterkapazitätsströmen $i_{Cf\beta}$ der LCL-Filter 3 mit einer $\beta$-Komponente der Raumzeigertransformation von Phasenanschlussströmen $i_{fi\beta}$ gebildet wird, was insbesondere nachfolgende Formel verdeutlicht.

$$P_d = k_d \cdot (i_{Cf\alpha} \cdot i_{fi\alpha} + i_{Cf\beta} \cdot i_{fi\beta})$$

Der Referenzwirkleistungswert $P_{ref}$ ist frei einstellbar und ist der Sollwert der Wirkleistung, welche am Ausgang der LCL-Filter 3 anliegen soll. Ferner wird der Hystereseblindleistungswert $d_Q$ aus einem Differenzblindleistungswert $Q_{diff}$ mittels eines zweiten Hysteresereglers 17 gebildet und der Differenzblindleistungswert $Q_{diff}$ aus der Subtraktion eines geschätzten Blindleistungswertes Q und eines Dämpfungsblindleistungswertes $Q_d$ von einem Referenzblindleistungswert $Q_{ref}$ gebildet, wobei der Dämpfungsblindleistungswert $Q_d$ aus einer mit dem einstellbaren Dämpfungsfaktor $k_d$ gewichteten Differenz von einer Multiplikation der $\beta$-Komponente der Raumzeigertransformation von Filterkapazitätsströmen $i_{Cf\beta}$ der LCL-Filter 3 mit der $\alpha$-Komponente der Raumzeigertransformation von Phasenanschlussströmen $i_{fi\alpha}$ und einer Multiplikation der $\alpha$-Komponente der Raumzeigertransformation von Filterkapazitätsströmen $i_{Cf\alpha}$ der LCL-Filter 3 mit der $\beta$-Komponente der Raumzeigertransformation von Phasenanschlussströmen $i_{fi\beta}$ gebildet wird, was insbesondere nachfolgende Formel verdeutlicht.

$$Q_d = k_d \cdot (i_{Cf\beta} \cdot i_{fi\alpha} - i_{Cf\alpha} \cdot i_{fi\beta})$$

Der Referenzblindleistungswert $Q_{ref}$ ist frei einstellbar und ist der Sollwert der Blindleistung, welche am Ausgang der LCL-Filter 3 anliegen soll.

Es sei erwähnt, dass die Raumzeigertransformation wie folgt definiert ist

$$\overline{x} = x_\alpha + jx_\beta$$

wobei $\overline{x}$ eine komplexe Grösse, $x_\alpha$ die $\alpha$-Komponente der Raumzeigertransformation der Grösse $\overline{x}$ und $x_\beta$ die $\beta$-Komponente der Raumzeigertransformation der Grösse $\overline{x}$ ist. Sämtliche bereits erwähnte und nachfolgend noch erwähnte Raumzeigertransformationen von Grössen werden nach vorstehend genannter Formel erzeugt.

Durch den Dämpfungswirkleistungswert $P_d$ und den Dämpfungsblindleistungswert $Q_d$ können vorteilhaft Verzerrungen, d.h. unerwünschte Schwingungen, in den Filterausgangsströmen $i_{fg1}$, $i_{fg2}$, $i_{fg3}$ und Filterausgangsspannungen aktiv gedämpft werden, so dass diese Verzerrungen stark reduziert werden und bestenfalls weitestgehend unterdrückt werden. Ein weiterer Vorteil des erfindungsgemässen Verfahrens liegt darin, dass kein diskreter, platzraubender, aufwendig realisierter und damit teurer Dämpfungswiderstand an den jeweiligen Phasenanschluss 2 angeschlossen werden muss, um die unerwünschten Verzerrungen effektiv dämpfen zu können.

Gemäss Fig. 1 weist die erfindungsgemässe Vorrichtung zur Durchführung des erfindungsgemässen Verfahrens zum Betrieb einer Umrichterschaltung dazu eine der Erzeugung des Hysteresewirkleistungswertes $d_P$, des Hystereseblindleistungswertes $d_Q$ und des ausgewählten Flusssektors $\theta_n$ dienende Regelungseinrichtung 4 auf, die über eine Ansteuerschaltung 5 zur Bildung eines Ansteuersignals S mit den ansteuerbaren Leistungshalbleiterschaltern verbunden ist. Die Ansteuerschaltung 5 umfasst beispielsweise eine Zuordnungstabelle (look-up table), bei welcher Hysteresewirkleistungswerte $d_P$, Hystereseblindleistungswerte $d_Q$ und ausgewählten Flusssektoren $\theta_n$ entsprechenden Ansteuersignalen S fest zugeordnet sind, oder ein Modulator, welcher auf der Pulsweitenmodulation basiert. Erfindungsgemäss umfasst die Regelungseinrichtung 4 eine erste Berechnungseinheit 6 zur Bildung des Hysteresewirkleistungswertes $d_P$, des Hystereseblindleistungswertes $d_Q$ und des ausgewählten Flusssektors $\theta_n$, wobei die erste Berechnungseinheit 6 den ersten Hystereseregler 16 zur Bildung des Hysteresewirkleistungswertes

$d_P$ aus dem Differenzwirkleistungswert $P_{diff}$, den zweiten Hystereseregler 17 zur Bildung des Hystereseblindleistungswertes $d_Q$ aus dem Differenzblindfeistungswert $Q_{diff}$ und einen Vektorzuordner 18 zur Bildung des ausgewählten Flusssektors $\theta_n$ aufweist. Desweiteren umfasst die Regelungseinrichtung 4 einen ersten Summierer 7 zur Bildung des Differenzwirkleistungswertes $P_{diff}$ aus der Subtraktion des geschätzten Wirkleistungswertes P und des Dämpfungswirkleistungswertes $P_d$ von dem Referenzwirkleistungswert $P_{ref}$ und einen zweiten Summierer 8 zur Bildung des Differenzblindleistungswertes $Q_{diff}$ aus der Subtraktion des geschätzten Blindleistungswertes Q und des Dämpfungsblindleistungswertes $Q_d$ von dem Referenzblindleistungswert $Q_{ref}$. Weiterhin umfasst die Regelungseinrichtung 4 eine zweite Berechnungseinheit 9 zur Bildung des Dämpfungswirkleistungswertes $P_d$ und des Dämpfungsblindleistungswertes $Q_d$, wobei der Dämpfungswirkleistungswert $P_d$ aus der mit dem einstellbaren Dämpfungsfaktor $k_d$ gewichteten Summe von der Multiplikation der $\alpha$-Komponente der Raumzeigertransformation von Filterkapazitätsströmen $i_{Cf_\alpha}$ der LCL-Filter 3 mit der $\alpha$-Komponente der Raumzeigertransformation von Phasenanschlussströme $i_{fi_\alpha}$ und der Multiplikation der $\beta$-Komponente der Raumzeigertransformation von Filterkapazitätsströmen $i_{Cf_\beta}$ der LCL-Filter 3 mit der $\beta$-Komponente der Raumzeigertransformation von Phasenanschlussströmen $i_{fi_\beta}$ gebildet ist und der Dämpfungsblindleistungswert $Q_d$ aus der mit dem einstellbaren Dämpfungsfaktor $k_d$ gewichteten Differenz von der Multiplikation der $\beta$-Komponente der Raumzeigertransformation von Filterkapazitätsströmen $i_{Cf_\beta}$ der LCL-Filter 3 mit der $\alpha$-Komponente der Raumzeigertransformation von Phasenanschlussströmen $i_{fi_\alpha}$ und einer Multiplikation der $\alpha$-Komponente der Raumzeigertransformation von Filterkapazitätsströmen $i_{Cf_\alpha}$ der LCL-Filter 3 mit der $\beta$-Komponente der Raumzeigertransformation von Phasenanschlussströme $i_{fi_\beta}$ gebildet ist. Die erfindungsgemässe Vorrichtung zur Durchführung des Verfahrens zum Betrieb der Umrichterschaltung ist demnach sehr einfach und kostengünstig zu realisieren, da der Schaltungsaufwand äusserst gering gehalten werden kann und ferner nur eine geringe Anzahl an Bauelementen für den Aufbau benötigt wird. Mittels dieser Vorrichtung ist das erfindungsgemässe Verfahren somit besonders einfach durchführbar.

Der geschätzte Wirkleistungswert P und der geschätzte Blindleistungswert Q wird jeweils aus einer $\alpha$-Komponente der Raumzeigertransformation von Filterausgangsströmen $i_{fg_\alpha}$, aus einer $\beta$-Komponente der Raumzeigertransformation von Filterausgangsströmen $i_{fg_\beta}$, aus einer $\alpha$-Komponente der Raumzeigertransformation von Filterausgangsflüssen $\psi_{L_\alpha}$ und aus einer $\beta$-Komponente der Raumzeigertransformation von Filterausgangsflüssen $\psi_{L_\beta}$ gebildet, was insbesondere nachfolgende Formeln verdeutlichen.

$$P = \omega \cdot (\psi_{L_\alpha} \cdot i_{fg_\beta} - \psi_{L_\beta} \cdot i_{fg_\alpha})$$

$$Q = \omega \cdot (\psi_{L_\alpha} \cdot i_{fg_\alpha} + \psi_{L_\beta} \cdot i_{fg_\beta})$$

Zur Bildung des geschätzten Wirkleistungswertes P und des geschätzten Blindleistungswertes Q weist die Regelungseinrichtung 4 gemäss Fig. 1 eine dritte Berechnungseinheit 10 auf, mittels welcher der geschätzte Wirkleistungswert P und der geschätzte Blindleistungswert Q jeweils nach zugehöriger vorstehend genannter Formel berechnet wird.

Die $\alpha$-Komponente der Raumzeigertransformation von Filterausgangsflüssen $\psi_{L_\alpha}$ wird aus einer $\alpha$-Komponente der Raumzeigertransformation von geschätzten Filterkapazitätsflüssen $\psi_{Cf_\alpha}$ und aus der $\alpha$-Komponente der Raumzeigertransformation von Filterausgangsströmen $i_{fg_\alpha}$ gebildet, was insbesondere nachfolgende Formel verdeutlicht.

$$\psi_{L_\alpha} = \psi_{Cf_\alpha} - L_{fg} \cdot i_{fg_\alpha}$$

Weiterhin wird die $\beta$-Komponente der Raumzeigertransformation von Filterausgangsflüssen $\psi_{L_\beta}$ aus einer $\beta$-Komponente der Raumzeigertransformation von geschätzten Filterkapazitätsflüssen $\psi_{Cf_\beta}$ und aus der $\beta$-Komponente der Raumzeigertransformation von Filterausgangsströmen $i_{fg_\beta}$ gebildet, was insbesondere nachfolgende Formel verdeutlicht.

$$\psi_{L_\beta} = \psi_{Cf_\beta} - L_{fg} \cdot i_{fg_\beta}$$

Zur Bildung der $\alpha$-Komponente der Raumzeigertransformation von Filterausgangsflüssen $\psi_{L_\alpha}$ und der $\beta$-Komponente der Raumzeigertransformation von Filterausgangsflüssen $\psi_{L_\beta}$ weist die Regelungseinrichtung 4 gemäss Fig. 1 eine vierte Berechnungseinheit 11 auf, mittels welcher die $\alpha$-Komponente der Raumzeigertransformation von Filterausgangsflüssen $\psi_{L_\alpha}$ und die $\beta$-Komponente der Raumzeigertransformation von Filterausgangsflüssen $\psi_{L_\beta}$ jeweils nach zugehöriger vorstehend genannter Formel berechnet wird.

Die $\alpha$-Komponente der Raumzeigertransformation von Filterausgangsströmen $i_{fg_\alpha}$ wird aus der $\alpha$-Komponente der Raumzeigertransformation von Phasenanschlussströme $i_{fi_\alpha}$, welche durch Raumzeigertransformation der gemäss Fig. 1 gemessenen Phasenanschlussströme $i_{fi1}, i_{fi2}, i_{fi3}$ gebildet wird, und aus der $\alpha$-Komponente der Raumzeigertransformation der Filterkapazitätsströme $i_{Cf_\alpha}$, welche durch Raumzeigertransformation der gemäss Fig. 1 gemessenen Filterkapazitätsströme $i_{Cf1}$, $i_{Cf2}$, $i_{Cf3}$ gebildet wird, durch Summierung gebildet. Ferner wird die β-Komponente der Raumzeigertransformation von Filterausgangsströmen $i_{fgβ}$ aus der β-Komponente der Raumzeigertransformation von Phasenanschlussströme $i_{fiβ}$, welche durch Raumzeigertransformation der gemäss Fig. 1 gemessenen Phasenanschlussströme $i_{fi1}$, $i_{fi2}$, $i_{fi3}$ gebildet wird, und aus der β-Komponente der Raumzeigertransformation der Filterkapazitätsströme $i_{Cfβ}$, welche durch Raumzeigertransformation der gemäss Fig. 1 gemessenen Filterkapazitätsströme $i_{Cf1}$, $i_{Cf2}$, $i_{Cf3}$ gebildet wird, durch Summierung gebildet. Eine Messung der Filterausgangsströmen $i_{fg1}$, $i_{fg2}$, $i_{fg3}$ kann somit vorteilhaft entfallen, wodurch die Vorrichtung vereinfacht wird, da keine Messensoren, insbesondere keine Stromwandler, benötigt werden. Es sei erwähnt, dass die Raumzeigertransformation der gemessenen Phasenanschlussströme $i_{fi1}$, $i_{fi2}$, $i_{fi3}$ und der gemessenen Filterkapazitätsströme $i_{Cf1}$, $i_{Cf2}$, $i_{Cf3}$ sowie der sonstigen raumzeigertransformierten Grössen innerhalb einer zugehörigen Berechnungseinheit 9, 10, 13, 14 oder separat in einer extra dafür vorgesehenen Raumzeigertransformationseinheit erfolgt beziehungsweise erfolgen kann.

Die α-Komponente der Raumzeigertransformation von geschätzten Filterkapazitätsflüssen $ψCf_α$ wiederum wird aus einem aktuellen Gleichspannungswert $u_{dc}$ des mit der Umrichtereinheit 1 verbundenen kapazitiven Energiespeichers 19, aus dem Ansteuersignal S und aus der α-Komponente der Raumzeigertransformation von Phasenanschlussströme $i_{fi_α}$ gebildet, was insbesondere nachfolgende Formel verdeutlicht, wobei $u_{C_α}$ die aus dem aktuellen Gleichspannungswert $u_{dc}$ und aus dem Ansteuersignal gebildete α-Komponente der Phasenanschlussspannung der Umrichtereinheit 1 ist.

$$ψ_{Cf_α} = \int u_{Cf_α} dt - L_{fi} \cdot i_{fii_α}$$

Entsprechend wird die β-Komponente der Raumzeigertransformation von geschätzten Filterkapazitätsflüssen $ψ_{Cfβ}$, aus dem aktuellen Gleichspannungswert $u_{dc}$ des mit der Umrichtereinheit 1 verbundenen kapazitiven Energiespeichers 19, aus dem Ansteuersignal S und aus der β-Komponente der Raumzeigertransformation von Phasenanschlussströme $i_{fiβ}$ gebildet wird, wobei $u_{Cβ_α}$ die aus dem aktuellen Gleichspannungswert $u_{dc}$ und aus dem Ansteuersignal gebildete β-Komponente der Phasenanschlussspannung der Umrichtereinheit 1 ist.

$$ψ_{Cfβ} = \int u_{Cfβ} dt - L_{fi} \cdot i_{fiβ}$$

Zur Bildung der α-Komponente der Raumzeigertransformation von geschätzten Filterkapazitätsflüssen $ψ_{Cf_α}$ und der β-Komponente der Raumzeigertransformation von geschätzten Filterkapazitätsflüssen $ψ_{Cfβ}$ weist die Regelungseinrichtung 4 gemäss Fig. 1 eine fünfte Berechnungseinheit 12 auf, mittels welcher die α-Komponente der Raumzeigertransformation von geschätzten Filterkapazitätsflüssen $ψ_{Cf_α}$ und die β-Komponente der Raumzeigertransformation von geschätzten Filterkapazitätsflüssen $ψ_{Cfβ}$ jeweils nach zugehöriger vorstehend genannter Formel berechnet wird.

Zur Bildung des bereits erwähnten Differenzblindleistungswertes $Q_{diff}$ wird zusätzlich ein Kompensationsblindleistungswert $Q_{comp}$ addiert, wobei der Kompensationsblindleistungswert $Q_{comp}$ durch Tiefpassfilterung eines geschätzten Filterkapazitätsblindleistungswertes $Q_{Cf}$ mittels eines Tiefpassfilters 15 gebildet wird. Somit wird vorteilhaft vermieden, dass unerwünschte Blindleistungsanteile der LCL-Filter 3, insbesondere der Filterkapazitäten $C_f$ der LCL-Filter 3, am Ausgang der LCL-Filter 3 anliegen, so dass sichergestellt werden kann, dass sich am Ausgang der LCL-Fitter 3 nur ein Blindleistungswert entsprechend dem eingestellten Referenzblindleistungswert $Q_{ref}$ einstellt. Gemäss Fig. 1 ist dem zweiten Summierer 8 zusätzlich der Kompensationsblindleistungswert $Q_{comp}$ zugeführt. Weiterhin wird der geschätzte Filterkapazitätsblindleistungswert $Q_{Cf}$ aus der α-Komponente der Raumzeigertransformation der Filterkapazitätsströme $i_{Cf_α}$, aus der β-Komponente der Raumzeigertransformation der Filterkapazitätsströme $i_{Cfβ}$, aus der α-Komponente der Raumzeigertransformation der geschätzten Filterkapazitätsflüsse $ψ_{Cf_α}$ und aus der β-Komponente der Raumzeigertransformation der geschätzten Filterkapazitätsflüsse $ψ_{Cfβ}$ gebildet, was insbesondere nachfolgende Formel verdeutlicht.

$$Q_{Cf} = ω \cdot (ψ_{Cf_α} \cdot i_{Cf_α} + ψ_{Cfβ} \cdot i_{Cfβ})$$

Die Regelungseinrichtung 4 weist zur Bildung des geschätzten Filterkapazitätsblindleistungswertes $Q_{Cf}$ gemäss Fig. 1 eine sechste Berechnungseinheit 13 auf, mittels welcher der geschätzte Filterkapazitätsblindleistungswert $Q_{Cf}$ nach vorstehend genannter Formel berechnet wird.

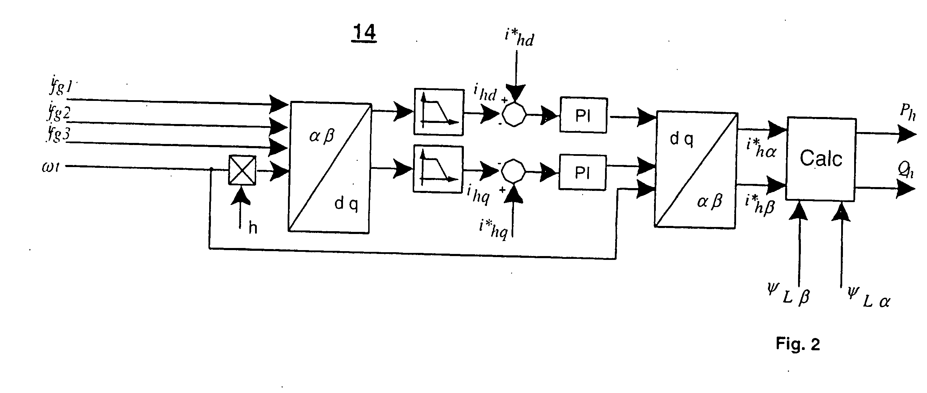

Zur Bildung des bereits erwähnten Differenzwirkleistungswertes $P_{diff}$ wird zusätzlich mindestens ein Kompensationsoberschwingungswirkleistungswert $P_h$ bezüglich der Grundschwingung der Filterausgangsströme $i_{fg1}$, $i_{fg2}$, $i_{fg3}$ addiert. Weiterhin wird zur Bildung des bereits genannten Differenzblindleistungswertes $Q_{diff}$ zusätzlich mindestens ein Kompensationsoberschwingungsblindleistungswert $Q_h$ bezüglich der Grundschwingung der Filterausgangsströme $i_{fg1}$, $i_{fg2}$, $i_{fg3}$ addiert. Gemäss Fig. 1 wird dem ersten Summierer 7 zur Bildung des Differenzwirkleistungswertes $P_{diff}$ zusätzlich der Kompensationsoberschwingungswirkleistungswert $P_h$ zugeführt. Darüber hinaus wird dem zweiten Summierer 7 zur Bildung des Differenzblindleistungswertes $Q_{diff}$ gemäss Fig. 1 zusätzlich der Kompensationsoberschwingungsblindleistungswert $Q_h$ zugeführt. Der Kompensationsoberschwingungswirkleistungswert $P_h$ und der Kompensationsoberschwingungsblindleistungswert $Q_h$ wird jeweils aus der $\alpha$-Komponente der Raumzeigertransformation der Filterausgangsströme $i_{fg\alpha}$, aus der $\beta$-Komponente der Raumzeigertransformation der Filterausgangsströme $i_{fg\beta}$, aus der $\alpha$-Komponente der Raumzeigertransformation der Filterausgangsflüsse $\psi_{L\alpha}$, aus der $\beta$-Komponente der Raumzeigertransformation der Filterausgangsflüsse $\psi_{L\beta}$ und aus dem Grundschwingungswinkel $\omega t$ bezüglich der Grundschwingung der Filterausgangsströme $i_{fg1}$, $i_{fg2}$, $i_{fg3}$ gebildet. Der Grund-schwingungswinkel $\omega t$ wird den Berechnungseinheiten 9, 10, 13, 14 und dem Vektorzuordner 18 gemäss Fig. 1 von einem Phasenregelkreis (Phase locked loop, kurz: PLL) bereitgestellt. Gemäss Fig. 1 weist die Regelungseinrichtung 4 eine siebte Berechnungseinheit 14 zur Bildung des Kompensationsoberschwingungswirkleistungswertes $P_h$ und des Kompensationsoberschwingungsblindleistungswertes $Q_h$, wobei in Fig. 2 eine Ausführungsform der siebten Berechnungseinheit 14 gezeigt ist. Die Addition beziehungsweise Aufschaltung mindestens eines Kompensationsoberschwingungswirkleistungswertes $P_h$ zur Bildung des Differenzwirkleistungswertes $P_{diff}$ und mindestens eines Kompensationsoberschwingungsblindleistungswertes $Q_h$ zur Bildung des Differenzblindleistungswertes $Q_{diff}$ bewirkt mit Vorteil eine aktive Verringerung von Oberschwingungen und damit insgesamt eine weitere Verbesserung in der Reduzierung von Oberschwingungen.

Gemäss Fig. 2 werden zunächst die $\alpha$-Komponente der Raumzeigertransformation der Filterausgangsströme $i_{fg\alpha}$ und die $\beta$-Komponente der Raumzeigertransformation der Filterausgangsströme $i_{fg\beta}$ aus zugeführten Filterausgangsströmen $i_{fg1}$, $i_{fg2}$, $i_{fg3}$ durch Raumzeigertransformation gebildet. Danach werden die $\alpha$-Komponente der Raumzeigertransformation der Filterausgangsströme $i_{fg\alpha}$ und die $\beta$-Komponente der Raumzeigertransformation der Filterausgangsströme $i_{fg\beta}$ Park-Clarke-transformiert, tiefpassgefiltert und als d-Komponente und der q-Komponente der Park-Clarke-Transformation mindestens einer gewünschten ausgewählten Oberschwingung der Filterausgangsströme $i_{hd}$, $i_{hq}$ bezüglich der Grundschwingung der Filterausgangsströme $i_{fg1}$, $i_{fg2}$, $i_{fg3}$ ausgegeben. Der Index h ist steht für die h-te Oberschwingung dieser und nachfolgend genannter Grössen, wobei h=1, 2, 3, ... ist.

Die Park-Clarke-Transformation ist allgemein definiert

$$\overline{x} = \left(x_d + jx_q\right)e^{j\omega t}$$

wobei $\overline{x}$ eine komplexe Grösse, $x_d$ die d-Komponente der Park-Clarke-Transformation der Grösse $\overline{x}$ und $x_q$ die q-Komponente der Park-Clarke-Transformation der Grösse $\overline{x}$ ist. Vorteilhaft werden bei der Park-Clarke-Transformation nicht nur die Grundschwingung der komplexen Grösse $\overline{x}$ transformiert, sondern auch sämtlich vorkommende Oberschwingungen der komplexen Grösse $\overline{x}$. Gemäss Fig. 2 wird die d-Komponente und die q-Komponente der Park-Clarke-Transformation der gewünschten ausgewählten h-ten Oberschwingung der Filterausgangsströme $i_{hd}$, $i_{hq}$ jeweils auf einen zugehörigen vorgebbaren Referenzwert $i^*_{hd}$, $i^*_{hq}$, vorzugsweise nach einer Proportional-Integral-Charakteristik, ausgeregelt und danach invers-Park-Clarke-transformatiert, wodurch eine $\alpha$-Komponente der Raumzeigertransformation der h-ten Oberschwingung von Referenzfilterausgangsströmen $i^*_{h\alpha}$ und eine $\beta$-Komponente der Raumzeigertransformation der h-ten Oberschwingung von Referenzfilterausgangsströmen $i^*_{h\beta}$ gebildet werden. Schliesslich wird der Kompensationsoberschwingungswirkleistungswert $P_h$ und der Kompensationsoberschwingungsblindleistungswert $Q_h$ jeweils aus der $\alpha$-Komponente der Raumzeigertransformation der h-ten Oberschwingung von Referenzfilterausgangsströmen $i^*_{h\alpha}$, der $\beta$-Komponente der Raumzeigertransformation der h-ten Oberschwingung von Referenzfilterausgangsströmen $1^*_{h\beta}$, der $\alpha$-Komponente der Raumzeigertransformation der Filterausgangsflüsse $\psi_{L\alpha}$ und aus der $\beta$-Komponente der Raumzeigertransformation der Filterausgangsflüsse $\psi_L$ berechnet, was insbesondere nachfolgende Formeln verdeutlichen.

$$P_h = \omega \cdot \left(\psi_{L\alpha} \cdot i^*_{h\beta} - \psi_{L\beta} \cdot i^*_{h\alpha}\right)$$

$$Q_h = \omega \cdot \left(\psi_{L\alpha} \cdot i^*_{h\alpha} + \psi_{L\beta} \cdot i^*_{h\beta}\right)$$

In Fig. 3 ist ein gängiger zeitlicher Verlauf der Filterausgangsströme $1_{fg1}$, $i_{fg2}$, $i_{fg3}$ dargestellt. Zur Veranschaulichung der Wirkungsweise der aktiven Dämpfung nach dem vorstehend erläuterten erfindungsgemässen Verfahren ist in Fig. 4 ein zeitlicher Verlauf der Filterausgangsströme $i_{fg1}$, $i_{fg2}$, $i_{fg3}$ gezeigt, worin unerwünschte Schwingungen in den Filterausgangsströmen $i_{fg1}$, $i_{fg2}$, $i_{fg3}$ aktiv gedämpft werden, so dass diese Verzerrungen stark reduziert werden. Weiterhin bewirkt die zusätzliche aktive Verringerung von Oberschwingungen nach dem vorstehend beschriebenen erfindungsgemässen Verfahren eine weitere Verbesserung in der Reduzierung von Oberschwingungen.

Sämtliche Schritte des erfindungsgemässen Verfahrens können als Software realisiert werden, wobei diese dann beispielsweise auf ein Computersystem, insbesondere mit einem digitalen Signalprozessor, geladen werden und darauf ablaufen können. Die in einem solchen System vorkommenden digitalen Verzögerungszeiten, insbesondere für die Berechnungen, können beispielsweise durch Addition eines zusätzlichen Terms zu der Grundschwingungsfrequenz $\omega t$ bei der Park-Clarke-Transformation allgemein berücksichtigt werden. Ferner kann die vorstehend detailliert beschriebene erfindungsgemässe Vorrichtung auch in einem Computersystem, insbesondere in einem digitalen Signalprozessor, realisiert sein.

Insgesamt konnte gezeigt werden, dass die, insbesondere in Fig. 1 gezeigte, erfindungsgemässe Vorrichtung zur Durchführung des erfindungsgemässen Verfahrens zum Betrieb der Umrichterschaltung sehr einfach und kostengünstig realisiert werden kann, da der Schaltungsaufwand äusserst gering ist und zudem nur eine geringe Anzahl an Bauelementen für den Aufbau benötigt wird. Somit ist mit dieser Vorrichtung ist das erfindungsgemässe Verfahren besonders einfach durchführbar.

**Bezugszeichenliste**

1 Umrichtereinheit
2 Phasenanschluss der Umrichtereinheit
3 LCL-Filter
4 Regelungseinrichtung
5 Ansteuerschaltung.
6 erste Berechnungseinheit
7 erster Summierer
8 zweiter Summierer
9 zweite Berechnungseinheit
10 dritte Berechnungseinheit
11 vierte Berechnungseinheit
12 fünfte Berechnungseinheit
13 sechste Berechnungseinheit
14 siebte Berechnungseinheit
15 Tiefpassfilter
16 erster Hystereseregler
17 zweiter Hystereseregler
18 Vektorzuordner

**Patentansprüche**

1. Verfahren zum Betrieb einer Umrichterschaltung, wobei die Umrichterschaltung eine Umrichtereinheit (1) mit einer Vielzahl an ansteuerbaren Leistungshalbleiterschaltern und ein an jedem Phasenanschluss (2) der Umrichtereinheit (1) angeschlossenes LCL-Filter (3) aufweist,
bei dem die ansteuerbaren Leistungshalbleiterschalter mittels eines aus einem Hysteresewirkleistungswert ($d_P$), aus einem Hystereseblindleistungswert ($d_Q$) und aus einem ausgewählten Flusssektor ($\theta_n$) gebildeten Ansteuersignals (S) angesteuert werden,

**dadurch gekennzeichnet,**
**dass** der Hysteresewirkleistungswert ($d_P$) aus einem Differenzwirkleistungswert ($P_{diff}$) mittels eines ersten Hysteresereglers (16) gebildet wird,
**dass** der Differenzwirkteistungswert ($P_{diff}$) aus der Subtraktion eines geschätzten Wirkleistungswertes (P) und eines Dämpfungswirkleistungswertes ($P_d$) von einem Referenzwirkleistungswert ($P_{ref}$) gebildet wird, wobei der Dämpfungswirkleistungswert ($P_d$) aus einer mit einem einstellbaren Dämpfungsfaktor ($k_d$) gewichteten Summe von einer Multiplikation einer $\alpha$-Komponente der Raumzeigertransformation von Filterkapazitätsströmen ($i_{Cf_\alpha}$) der LCL-Filter (3) mit einer $\alpha$-Komponente der Raumzeigertransformation von Phasenanschlussströmen ($i_{fi_\alpha}$) und einer Multiplikation einer $\beta$-Komponente der Raumzeigertransformation von Filterkapazitätsströmen ($i_{Cf_\beta}$) der LCL-Filter (3) mit einer $\beta$-Komponente der Raumzeigertransformation von Phasenanschlussströmen ($i_{fi_\beta}$) gebildet wird,
**dass** der Hystereseblindleistungswert ($d_Q$) aus einem Differenzblindleistungswert ($Q_{diff}$) mittels eines zweiten Hysteresereglers (17) gebildet wird,
**dass** der Differenzblindleistungswert ($Q_{diff}$) aus der Subtraktion eines geschätzten Blindleistungswertes (Q) und eines Dämpfungsblindleistungswertes ($Q_d$) von einem Referenzblindleistungswert ($Q_{ref}$) gebildet wird, wobei der Dämpfungsblindleistungswert ($Q_d$) aus einer mit dem einstellbaren Dämpfungsfaktor ($k_d$) gewichteten Differenz von einer Multiplikation der $\beta$-Komponente der Raumzeigertransformation von Filterkapazitätsströmen ($i_{Cf_\beta}$) der LCL-Filter (3) mit der $\alpha$-Komponente der Raumzeigertransformation von Phasenanschlussströmen ($i_{fi_\alpha}$) und einer Multiplikation der $\alpha$-Komponente der Raumzeigertransformation von Filterkapazitätsströmen ($i_{Cf_\alpha}$) der LCL-Filter (3) mit der $\beta$-Komponente der Raumzeigertransformation von Phasenanschlussströmen ($i_{fi_\beta}$) gebildet wird.

2. Verfahren nach Anspruch 1, **dadurch gekennzeichnet, dass** der geschätzte Wirkleistungswert (P) und der geschätzte Blindleistungswert (Q) jeweils aus einer $\alpha$-Komponente der Raumzeigertransformation von Filterausgangsströmen ($i_{fg_\alpha}$), aus einer $\beta$-Komponente der Raumzeigertransformation von Filterausgangsströmen ($i_{fg_\beta}$), aus einer $\alpha$-Komponente der Raumzeigertransformation von Filterausgangsflüssen ($\psi_{L_\alpha}$) und aus einer $\beta$-Komponente der Raumzeigertransformation von Filterausgangsflüssen ($\psi_{L_\beta}$) gebildet wird.

3. Verfahren nach Anspruch 2, **dadurch gekennzeichnet, dass** die $\alpha$-Komponente der Raumzeigertransformation von Filterausgangsflüssen ($\psi_{L_\alpha}$) aus einer $\alpha$-Komponente der Raumzeigertransformation von geschätzten Filterkapazitätsflüssen ($\psi_{Cf_\alpha}$) und

aus der α-Komponente der Raumzeigertransformation von Filterausgangsströmen ($i_{fg_\alpha}$) gebildet wird, und dass die β-Komponente der Raumzeigertransformation von Filterausgangsflüssen ($\psi_{L_\beta}$) aus einer β-Komponente der Raumzeigertransformation von geschätzten Filterkapazitätsflüssen ($\psi_{Cf_\beta}$) und aus der β-Komponente der Raumzeigertransformation von Filterausgangsströmen ($i_{fg_\beta}$) gebildet wird.

4. Verfahren nach Anspruch 3, **dadurch gekennzeichnet, dass** die α-Komponente der Raumzeigertransformation von geschätzten Filterkapazitätsflüssen ($\psi_{Cf_\alpha}$) aus einem aktuellen Gleichspannungswert ($u_{dc}$) eines mit der Umrichtereinheit (1) verbundenen kapazitiven Energiespeichers (19), aus dem Ansteuersignal (S) und aus der α-Komponente der Raumzeigertransformation von Phasenanschlussströme ($i_{fi_\alpha}$) gebildet wird, und dass β-Komponente der Raumzeigertransformation von geschätzten Filterkapazitätsflüssen ($\psi_{Cf_\beta}$) aus dem aktuellen Gleichspannungswert ($u_{dc}$) des mit der Umrichtereinheit (1) verbundenen kapazitiven Energiespeichers (19), aus dem Ansteuersignal (S) und aus der β-Komponente der Raumzeigertransformation von Phasenanschlussströme ($i_{fi_\beta}$) gebildet wird.

5. Verfahren nach Anspruch 3 oder 4, **dadurch gekennzeichnet, dass** zur Bildung des Differenzblindleistungswertes ($Q_{diff}$) zusätzlich ein Kompensationsblindleistungswert ($Q_{comp}$) addiert wird, wobei der Kompensationsblindleistungswert ($Q_{comp}$) durch Tiefpassfilterung eines geschätzten Filterkapazitätsblindleistungswertes ($Q_{Cf}$) gebildet wird.

6. Verfahren nach Anspruch 5, **dadurch gekennzeichnet, dass** der geschätzte Filterkapazitätsblindleistungswert ($Q_{Cf}$) aus der α-Komponente der Raumzeigertransformation der Filterkapazitätsströme ($i_{Cf_\alpha}$), aus der β-Komponente der Raumzeigertransformation der Filterkapazitätsströme ($i_{Cf_\beta}$), aus der α-Komponente der Raumzeigertransformation der geschätzten Filterkapazitätsflüsse ($\psi_{Cf_\alpha}$) und aus der β-Komponente der Raumzeigertransformation der geschätzten Filterkapazitätsflüsse ($\psi_{Cf_\beta}$) gebildet wird.

7. Verfahren nach einem der Ansprüche 3 bis 6, **dadurch gekennzeichnet, dass** zur Bildung des Differenzwirkleistungswertes ($P_{diff}$) zusätzlich mindestens ein Kompensationsoberschwingungswirkleistungswert ($P_h$) bezüglich der Grundschwingung der Filterausgangsströme ($i_{fg1}$, $i_{fg2}$, $i_{fg3}$) addiert wird, und dass zur Bildung des Differenzblindleistungswert ($Q_{diff}$) zusätzlich mindestens ein Kompensationsoberschwingungsblindleistungswert ($Q_h$) bezüglich der Grundschwingung der Filterausgangsströme ($i_{fg1}$, $i_{fg2}$, $i_{fg3}$) addiert wird.

8. Verfahren nach Anspruch 7, **dadurch gekennzeichnet, dass** der Kompensationsoberschwingungswirkleistungswert ($P_h$) und der Kompensationsoberschwingungsblindleistungswert ($Q_h$) jeweils aus der α-Komponente der Raumzeigertransformation der Filterausgangsströme ($i_{fg_\alpha}$), aus der β-Komponente der Raumzeigertransformation der Filterausgangsströme ($i_{fg_\beta}$), aus der α-Komponente der Raumzeigertransformation der Filterausgangsflüsse ($\psi_{L_\alpha}$), aus der β-Komponente der Raumzeigertransformation der Filterausgangsflüsse ($\psi_{L_\beta}$) und aus dem Grundschwingungswinkel ($\omega t$) bezüglich der Grundschwingung der Filterausgangsströme ($i_{fg1}$, $i_{fg2}$, $i_{fg3}$) gebildet wird.

9. Vorrichtung zur Durchführung eines Verfahrens zum Betrieb einer Umrichterschaltung, wobei die Umrichterschaltung eine Umrichtereinheit (1) mit einer Vielzahl an ansteuerbaren Leistungshalbleiterschaltern und ein an jedem Phasenanschluss (2) der Umrichtereinheit (1) angeschlossenes LCL-Filter (3) aufweist,
mit einer der Erzeugung eines Hysteresewirkleistungswertes ($d_P$), eines Hystereseblindleistungswertes ($d_Q$) und eines ausgewählten Flusssektors ($\theta_n$) dienenden Regelungseinrichtung (4), die über eine Ansteuerschaltung (5) zur Bildung eines Ansteuersignals (S) mit den ansteuerbaren Leistungshalbleiterschaltern verbunden ist,
**dadurch gekennzeichnet,**
**dass** die Regelungseinrichtung (4) umfasst
eine erste Berechnungseinheit (6) zur Bildung des Hysteresewirkleistungswertes ($d_P$), des Hystereseblindleistungswertes ($d_Q$) und des ausgewählten Flusssektors ($\theta_n$), wobei die erste Berechnungseinheit (6) einen ersten Hystereseregler (16) zur Bildung des Hysteresewirkleistungswertes ($d_P$) aus einem Differenzwirkleistungswert ($P_{diff}$), einen zweiten Hystereseregler (17) zur Bildung des Hystereseblindleistungswertes ($d_Q$) aus einem Differenzblindleistungswert ($Q_{diff}$) und einen Vektorzuordner (18) zur Bildung des ausgewählten Flusssektors ($\theta_n$) aufweist,
einen ersten Summierer (7) zur Bildung des Differenzwirkleistungswertes ($P_{diff}$) aus der Subtraktion eines geschätzten Wirkleistungswertes (P) und eines Dämpfungswirkleistungswertes ($P_d$) von einem Referenzwirkleistungswert ($P_{ref}$),
einen zweiten Summierer (8) zur Bildung des Differenzblindleistungswertes ($Q_{diff}$) aus der Subtraktion eines geschätzten Blindleistungswertes (Q) und eines Dämpfungsblindleistungswertes ($Q_d$) von einem Referenzblindleistungswert ($Q_{ref}$),
eine zweite Berechnungseinheit (9) zur Bildung des Dämpfungswirkleistungswertes ($P_d$) und des Dämpfungsblindleistungswertes ($Q_d$), wobei der Dämpfungswirkleistungswert ($P_d$) aus einer mit einem einstellbaren Dämpfungsfaktor ($k_d$) gewichteten Summe von einer Multiplikation einer $\alpha$-Komponente der Raumzeigertransformation von Filterkapazitätsströmen ($i_{Cf_\alpha}$) der LCL-Filter (3) mit einer $\alpha$-Komponente der Raumzeigertransformation von Phasenanschlussströme ($i_{fi_\alpha}$) und einer Multiplikation einer $\beta$-Komponente der Raumzeigertransformation von Filterkapazitätsströmen ($i_{Cf_\beta}$) der LCL-Filter (3) mit einer $\beta$-Komponente der Raumzeigertransformation von Phasenanschlussströmen ($i_{fi_\beta}$) gebildet ist und der Dämpfungsblindleistungswert ($Q_d$) aus einer mit dem einstellbaren Dämpfungsfaktor ($k_d$) gewichteten Differenz von einer Multiplikation der $\beta$-Komponente der Raumzeigertransformation von Filterkapazitätsströmen ($i_{Cf_\beta}$) der LCL-Filter (3) mit der $\alpha$-Komponente der Raumzeigertransformation von Phasenanschlussströmen ($i_{fi_\alpha}$) und einer Multiplikation der $\alpha$-Komponente der Raumzeigertransformation von Filterkapazitätsströmen ($i_{Cf_\alpha}$) der LCL-Filter (3) mit der $\beta$-Komponente der Raumzeigertransformation von Phasenanschlussströme ($i_{fi_\beta}$) gebildet ist.

10. Vorrichtung nach Anspruch 9, **dadurch gekennzeichnet, dass** die Regelungseinrichtung (4) eine dritte Berechnungseinheit (10) zur Bildung des geschätzten Wirkleistungswertes (P) und des geschätzten Blindleistungswertes (Q) jeweils aus einer $\alpha$-Komponente der Raumzeigertransformation von Filterausgangsströmen ($i_{fg_\alpha}$), aus einer $\beta$-Komponente der Raumzeigertransformation von Filterausgangsströmen ($i_{fg_\beta}$), aus einer $\alpha$-Komponente der Raumzeigertransformation von Filterausgangsflüssen ($\psi_{L_\alpha}$) und aus einer $\beta$-Komponente der Raumzeigertransformation von Filterausgangsflüssen ($\psi_{L_\beta}$) aufweist.

11. Vorrichtung nach Anspruch 10, **dadurch gekennzeichnet, dass** die Regelungseinrichtung (4) eine vierte Berechnungseinheit (11) zur Bildung der $\alpha$-Komponente der Raumzeigertransformation von Filterausgangsflüssen ($\psi_{L_\alpha}$ und der $\beta$-Komponente der Raumzeigertransformation von Filterausgangsflüssen ($\psi_{L_\beta}$) aufweist, wobei die $\alpha$-Komponente der Raumzeigertransformation von Filterausgangsflüssen ($\psi_{L_\alpha}$) aus einer $\alpha$-Komponente der Raumzeigertransformation von geschätzten Filterkapazitätsflüssen ($\psi_{Cf_\alpha}$) und aus der $\alpha$-Komponente der Raumzeigertransformation von Filterausgangsströmen ($i_{fg_\alpha}$) gebildet ist und die $\beta$-Komponente der Raumzeigertransformation von Filterausgangsflüssen ($\psi_{L_\beta}$) aus einer $\beta$-Komponente der Raumzeigertransformation von geschätzten Filterkapazitätsflüssen ($\psi_{Cf_\beta}$) und aus der $\beta$-Komponente der Raumzeigertransformation von Filterausgangsströmen ($i_{fg_\beta}$) gebildet ist.

12. Vorrichtung nach Anspruch 11, **dadurch**

**gekennzeichnet, dass** die Regelungseinrichtung (4) eine fünfte Berechnungseinheit (12) zur Bildung der $\alpha$-Komponente der Raumzeigertransformation von geschätzten Filterkapazitätsflüssen ($\psi_{Cf_\alpha}$) und der $\beta$-Komponente der Raumzeigertransformation von geschätzten Filterkapazitätsflüssen ($\psi_{Cf_\beta}$) aufweist, wobei die $\alpha$-Komponente der Raumzeigertransformation von geschätzten Filterkapazitätsflüssen ($\psi_{Cf_\alpha}$) aus einem aktuellen Gleichspannungswert ($u_{dc}$) eines mit der Umrichtereinheit (1) verbundenen kapazitiven Energiespeichers (19), aus dem Ansteuersignal (S) und aus der $\alpha$-Komponente der Raumzeigertransformation von Phasenanschlussströme ($i_{fi_\alpha}$) gebildet ist und die $\beta$-Komponente der Raumzeigertransformation von geschätzten Filterkapazitätsflüssen ($\psi_{Cf_\beta}$) aus dem aktuellen Gleichspannungswert ($u_{dc}$) des mit der Umrichtereinheit (1) verbundenen kapazitiven Energiespeichers (19), aus dem Ansteuersignal (S) und aus der $\beta$-Komponente der Raumzeigertransformation von Phasenanschlussströme ($i_{fi_\beta}$) gebildet ist.

13. Vorrichtung nach Anspruch 11 oder 12, **dadurch gekennzeichnet, dass** dem zweiten Summierer (8) zur Bildung des Differenzblindleistungswertes ($Q_{diff}$) zusätzlich ein Kompensationsblindleistungswert ($Q_{comp}$) zugeführt ist, wobei der Kompensationsblindleistungswert ($Q_{comp}$) durch Tiefpassfilterung eines geschätzten Filterkapazitätsblindleistungswertes ($Q_{Cf}$) mittels eines Tiefpasses (15) gebildet ist.

14. Vorrichtung nach Anspruch 13, **dadurch gekennzeichnet, dass** die Regelungseinrichtung (4) eine sechste Berechnungseinheit (13) zur Bildung des geschätzten Filterkapazitätsblindleistungswertes ($Q_{Cf}$) aus der $\alpha$-Komponente der Raumzeigertransformation der Filterkapazitätsströme ($i_{Cf_\alpha}$), aus der $\beta$-Komponente der Raumzeigertransformation der Filterkapazitätsströme ($i_{Cf_\beta}$), aus der $\alpha$-Komponente der Raumzeigertransformation der geschätzten Filterkapazitätsflüsse ($\psi_{Cf_\alpha}$) und aus der $\beta$-Komponente der Raumzeigertransformation der geschätzten Filterkapazitätsflüsse ($\psi_{Cf_\beta}$) aufweist.

15. Vorrichtung nach einem der Ansprüche 11 bis 14, **dadurch gekennzeichnet, dass** dem ersten Summierer (7) zur Bildung des Differenzwirkleistungswertes ($P_{diff}$) zusätzlich mindestens ein Kompensationsoberschwingungswirkleistungswert ($P_h$) bezüglich der Grundschwingung der Filterausgangsströme ($i_{fg1}$, $i_{fg2}$, $i_{fg3}$) zugeführt ist, und dass dem zweiten Summierer (7) zur Bildung des Differenzblindleistungswert ($Q_{diff}$) zusätzlich mindestens ein Kompensationsoberschwingungsblindleistungswert ($Q_h$) bezüglich der Grundschwingung

der Filterausgangsströme ($i_{fg1}$, $i_{fg2}$, $i_{fg3}$) zugeführt ist.

16. Vorrichtung nach Anspruch 15, **dadurch gekennzeichnet, dass** die Regelungseinrichtung (4) eine siebte Berechnungseinheit (14) zur Bildung des Kompensationsoberschwingungswirkleistungswertes ($P_h$) und des Kompensationsoberschwingungsblindleistungswertes ($Q_h$) jeweils aus der α-Komponente der Raumzeigertransformation der Filterausgangsströme ($i_{fg\alpha}$), aus der β-Komponente der Raumzeigertransformation der Filterausgangsströme ($i_{fg\beta}$), aus der α-Komponente der Raumzeigertransformation der Filterausgangsflüsse ($\psi_{L\alpha}$), aus der β-Komponente der Raumzeigertransformation der Filterausgangsflüsse ($\psi_{L\beta}$) und aus dem Grundschwingungswinkel ($\omega t$) bezüglich der Grundschwingung der Filterausgangsströme ($i_{fg1}$, $i_{fg2}$, $i_{fg3}$) aufweist.

**Claims**

1. A method for operating a converter circuit, with the converter circuit having a converter unit (1) with a plurality of drivable power semiconductor switches and an LCL filter (3) connected to each phase connection (2) of the converter unit (1), in which the drivable power semiconductor switches are driven by means of a drive signal (S) which is formed from a hysteresis power value ($d_P$), from a hysteresis wattless-component value ($d_Q$) and from a selected flux sector ($\theta_n$),
   **characterized**
   **in that** the hysteresis power value ($d_P$) is formed from a difference power value ($P_{diff}$) by means of a first hysteresis regulator (16),
   **in that** the difference power value ($P_{diff}$) is formed from the subtraction of an estimated power value (P) and of a damping power value ($P_d$) from a reference power value ($P_{ref}$), with the damping power value ($P_d$) being formed from a sum, weighted by a variable damping factor ($k_d$), of a multiplication of an α component of the space vector transformation of filter capacitance currents ($i_{cf\alpha}$) of the LCL filters (3) by an α component of the space vector transformation of phase connection currents ($i_{fi\beta}$) and a multiplication of a β component of the space vector transformation of filter capacitance currents ($i_{cf\beta}$) of the LCL filters by a β component of the space vector transformation of phase connection currents ($i_{fi\beta}$),
   **in that** the hysteresis wattless component value ($d_Q$) is formed from a difference wattless component value ($Q_{diff}$) by means of a second hysteresis regulator (17),
   **in that** the difference wattless component value ($Q_{diff}$) is formed from the subtraction of an estimated wattless component value (Q) and of a damping wattless component value ($Q_d$) from a reference wattless component value ($Q_{ref}$) with the damping wattless component value ($Q_d$) being formed from a difference, weighted by the variable damping factor ($k_d$), of a multiplication of the β component of the space vector transformation of filter capacitance currents ($i_{cf\beta}$) of the LCL filters by the α component of the space vector transformation of phase connection currents ($i_{fi\alpha}$) and a multiplication of the α component of the space vector transformation of filter capacitance currents ($i_{cf\alpha}$) of the LCL filters by the β component of the space vector transformation of phase connection currents ($i_{fi\beta}$).

2. The method as claimed in claim 1, **characterized in that** the estimated power value (P) and the estimated wattless component (Q) are each formed from an α component of the space vector transformation of filter output currents ($i_{fg\alpha}$), from a β component of the space vector transformation of filter output currents ($i_{fg\beta}$), from an α component of the space vector transformation of filter output fluxes ($\psi_{L\alpha}$) and from a β component of the space vector transformation of filter output fluxes ($\psi_{L\beta}$).

3. The method as claimed in claim 2, **characterized in that** the α component of the space vector transformation of filter output fluxes ($\psi_{L\alpha}$) is formed from an α component of the space vector transformation of estimated filter capacitance fluxes (($\psi_{Cf\alpha}$) and from the α component of the space vector transformation of filter output currents ($i_{fg\alpha}$),
   and **in that** the β component of the space vector transformation of filter output fluxes ($\psi_{L\beta}$) is formed from a β component of the space vector transformation of estimated filter capacitance fluxes ($\psi_{Cf\beta}$) and from the β component of the space vector transformation of filter output currents ($i_{fg\beta}$).

4. The method as claimed in claim 3, **characterized in that** the α component of the space vector transformation of estimated filter capacitance fluxes ($\psi_{Cf\alpha}$) is formed from an instantaneous DC voltage value ($U_{dc}$) of a capacitive energy store (19) connected to the converter unit (1), from the drive signal (S) and from the α component of the space vector transformation of phase connection currents ($i_{fi\alpha}$), and
   **in that** the β component of the space vector transformation of estimated filter capacitance fluxes ($\psi_{Cf\beta}$) is formed from the instantaneous DC voltage value ($U_{dc}$) of the capacitive energy store (19) connected to the converter unit (1), from the drive signal (S) and from the β component of the space vector transformation of phase connection currents ($i_{fi\beta}$).

5. The method as claimed in claim 3 or 4, **characterized in that** a compensation wattless component value ($Q_{comp}$) is additionally added in order to form the difference wattless component value ($Q_{diff}$), with the compensation wattless component value ($Q_{comp}$) being formed by low-pass filtering of an estimated filter capacitance wattless component value ($Q_{Cf}$).

6. The method as claimed in claim 5, **characterized in that** the estimated filter capacitance wattless component value ($Q_{Cf}$) is formed from the α component of the space vector transformation of the filter capacitance currents ($i_{Cf\alpha}$), from the β component of the space vector transformation of the filter capacitance currents ($i_{cf\beta}$), from the α component of the space vector transformation of the estimated filter capacitance fluxes ($\psi_{Cf\alpha}$) and from the β component of the space vector transformation of the estimated filter capacitance fluxes ($\psi_{Cf\beta}$).

7. The method as claimed in one of claims 3 to 6, **characterized in that** at least one compensation harmonic power value ($P_h$) relating to the fundamental of the filter output currents ($i_{fg1}$, $i_{fg2}$, $i_{fg3}$) is additionally added in order to form the difference power value ($P_{diff}$), and
**in that** at least one compensation harmonic wattless component value ($Q_h$) relating to the fundamental of the filter output currents ($i_{fg1}$, $i_{fg2}$, $i_{fg3}$) is additionally added in order to form the difference wattless component value ($Q_{diff}$).

8. The method as claimed in claim 7, **characterized in that** the compensation harmonic power value ($P_h$) and the compensation harmonic wattless component value ($Q_h$) are each formed from the α component of the space vector transformation of the filter output currents ($i_{fg\alpha}$), from the β component of the space vector transformation of the filter output currents ($i_{fg\beta}$), from the α component of the space vector transformation of the filter output fluxes ($\psi_{L\alpha}$) and from the β component of the space vector transformation of the filter output fluxes ($\psi_{L\beta}$), and from the fundamental angle (ωt) relating to the fundamental of the filter output currents ($i_{fg1}$, $i_{fg2}$, $i_{fg3}$).

9. An apparatus for carrying out a method for operating a converter circuit, with the converter circuit having a converter unit (1) with a plurality of drivable power semiconductor switches and an LCL filter (3) connected to each phase connection (2) of the converter unit (1),
having a control device (4) which is used for producing a hysteresis power value ($d_P$), a hysteresis wattless component value ($d_Q$) and a selected flux sector ($\theta_n$) and is connected to the drivable power semiconductor switches via a drive circuit (5) in order to form a drive signal (S),
**characterized**

**in that** the control device (4) has
a first calculation unit (6) for forming the hysteresis power value ($d_P$), the hysteresis wattless component value ($d_Q$) and the selected flux sector ($\theta_n$), with the first calculation unit (6) having a first hysteresis regulator (16) for forming the hysteresis power value ($d_P$) from a difference power value ($P_{diff}$), a second hysteresis regulator (17) for forming the hysteresis wattless component value ($d_Q$) from a difference wattless component value ($Q_{diff}$) and a vector allocator (18) for forming the selected flux sector ($\theta_n$),
a first adder (7) for forming the difference power value ($P_{diff}$) from the subtraction of an estimated power value (P) and of a damping power value ($P_d$) from a reference power value ($P_{ref}$),
a second adder (8) for forming the difference wattless component value ($Q_{diff}$) from the subtraction of an estimated wattless component value (Q) and of a damping wattless component value ($Q_d$) from a reference wattless component value ($Q_{ref}$),
a second calculation unit (9) for forming the damping power value ($P_d$) and the damping wattless component value ($Q_d$), with the damping power value ($P_d$) being formed from a sum, weighted by a variable damping factor ($k_d$), of a multiplication of an α component of the space vector transformation of filter capacitance currents ($i_{cf\alpha}$) of the LCL filters (3) by an α component of the space vector transformation of phase connection currents ($i_{fi\alpha}$), and a multiplication of a β component of the space vector transformation of filter capacitance currents ($i_{Cf\beta}$) of the LCL filter (3) by a β component of the space vector transformation of phase connection currents ($i_{fi\beta}$), and the damping wattless component value ($Q_d$) being formed from a difference, weighted by the variable damping factor ($k_d$), of a multiplication of the β component of the space vector transformation of filter capacitance currents ($i_{cf\beta}$) of the LCL filters 3 by the α, component of the space vector transformation of phase connection currents ($i_{fi\alpha}$) and a multiplication of the α component of the space vector transformation of filter capacitance currents ($i_{cf\alpha}$) of the LCL filters (3) by the β component of the space vector transformation of phase connection currents ($i_{fi\beta}$).

10. The apparatus as claimed in claim 9, **characterized in that** the control device (4) has a third calculation unit (10) for forming the estimated power value (P) and the estimated wattless component value (Q) in each case from an α component of the space vector transformation of filter output currents ($i_{fg\alpha}$) from a β component of the space vector transformation of filter output currents ($i_{fg\beta}$), from an α component of the space vector transformation of filter output fluxes ($\psi_{L\alpha}$) and from a β component of the space vector transformation of filter output fluxes ($\psi_{L\beta}$).

11. The apparatus as claimed in claim 10, **character-**

**ized in that** the control device (4) has a fourth calculation unit (11) for forming the $\alpha$ component of the space vector transformation of filter output fluxes ($\psi_{L\alpha}$) and the $\beta$ component of the space vector transformation of filter output fluxes ($\psi_{L\beta}$), with the $\alpha$ component of the space vector transformation of filter output fluxes ($\psi_{L\alpha}$) being formed from an $\alpha$ component of the space vector transformation of estimated filter capacitance fluxes ($\psi_{Cf\alpha}$) and from the $\alpha$ component of the space vector transformation of filter output currents ($i_{fg\alpha}$), and with the $\beta$ component of the space vector transformation of filter output fluxes ($\psi_{L\beta}$) being formed from a $\beta$ component of the space vector transformation of estimated filter capacitance fluxes ($\psi_{Cf\beta}$) and from the $\beta$ component of the space vector transformation of filter output currents ($i_{fg\beta}$).

12. The apparatus as claimed in claim 11, **characterized in that** the control device (4) has a fifth calculation unit (12) for forming the $\alpha$ component of the space vector transformation of estimated filter capacitance fluxes ($\psi_{Cf\alpha}$) and the $\beta$ component of the space vector transformation of estimated filter capacitance fluxes ($\psi_{Cf\beta}$) with the $\alpha$ component of the space vector transformation of estimated filter capacitance fluxes ($\psi_{Cf\alpha}$) being formed from an instantaneous DC voltage value ($u_{dc}$) of a capacitive energy store (19) connected to the converter unit (1), from the drive signal (S) and from the $\alpha$ component of the space vector transformation of phase connection currents ($i_{fi\alpha}$), and with the $\beta$ component of the space vector transformation of estimated filter capacitance fluxes ($\psi_{Cf\beta}$) being formed from the instantaneous DC voltage value ($u_{dc}$) of the capacitive energy store (19) connected to the converter unit (1) from the drive signal (S) and from the $\beta$ component of the space vector transformation of phase connection currents ($i_{fi\beta}$).

13. The apparatus as claimed in claim 11 or 12, **characterized in that** the second adder (8) is additionally supplied with a compensation wattless component value ($Q_{diff}$) in order to form the difference wattless component value ($Q_{comp}$), with the compensation wattless component value ($Q_{comp}$) being formed by low-pass filtering of an estimated filter capacitance wattless component value ($Q_{Cf}$) by means of a low-pass filter (15).

14. The apparatus as claimed in claim 13, **characterized in that** the control device (4) has a sixth calculation unit (13) for forming the estimated filter capacitance wattless component value ($Q_{Cf}$) from the $\alpha$ component of the space vector transformation of the filter capacitance currents ($i_{Cf\alpha}$), from the $\beta$ component of the space vector transformation of the filter capacitance currents ($i_{Cf\beta}$), from the $\alpha$ component of the space vector transformation of the estimated filter capacitance fluxes ($\psi_{Cf\alpha}$), and from the $\beta$ component of the space vector transformation of the estimated filter capacitance fluxes ($\psi_{CF\beta}$).

15. The apparatus as claimed in one of claims 11 to 14, **characterized in that** the first adder (7) is additionally supplied with at least one compensation harmonic power value ($P_h$) relating to the fundamental of the filter output currents ($i_{fg1}$, $i_{fg2}$, $i_{fg3}$) in order to form the difference power value ($P_{diff}$), and **in that** the second adder (7) is additionally supplied with at least one compensation harmonic wattless component value ($Q_h$) relating to the fundamental of the filter output currents ($i_{fg1}$, $i_{fg2}$, $i_{fg3}$) in order to form the difference wattless component value ($Q_{diff}$).

16. The apparatus as claimed in claim 15, **characterized in that** the control device (4) has a seventh calculation unit (14) for forming the compensation harmonic power value ($P_h$) and the compensation harmonic wattless component value ($Q_h$) in each case from the $\alpha$ component of the space vector transformation of the filter output currents ($i_{fg\alpha}$), from the $\beta$ component of the space vector transformation of the filter output currents ($i_{fg\beta}$), from the $\alpha$ component of the space vector transformation of the filter output fluxes ($\psi_{L\alpha}$), from the $\beta$ component of the space vector transformation of the filter output fluxes ($\psi_L\beta$), and from the fundamental angle ($\omega t$) relating to the fundamental of the filter output currents ($i_{fg1}$, $i_{fg2}$, $i_{fg3}$).

**Revendications**

1. Procédé de gestion d'un circuit convertisseur, dans lequel le circuit convertisseur présente une unité de convertisseur (1) dotée de plusieurs commutateurs de puissance asservis à semi-conducteur et un filtre LCL (3) raccordé à chaque borne de phase (2) de l'unité de convertisseur (1),
les commutateurs de puissance asservis à semi-conducteur étant commandés au moyen d'un signal de commande (S) formé d'une valeur ($d_p$) de puissance active d'hystérésis, d'une valeur ($d_Q$) de puissance réactive d'hystérésis et d'un secteur de flux ($\theta_n$) sélectionné,
**caractérisé en ce que**
la valeur ($d_p$) de puissance active d'hystérésis est formée au moyen d'un premier régulateur d'hystérésis (16) à partir d'une valeur ($P_{diff}$) de différence de puissance active,
**en ce que** la valeur ($P_{diff}$) de différence de puissance active est formée de la soustraction d'une valeur estimée (P) de la puissance active et d'une valeur ($P_d$) de la puissance active d'atténuation d'une valeur ($P_{ref}$) de référence de puissance active, la valeur ($P_d$) de puissance active d'atténuation étant formée de la somme, pondérée par un facteur d'atténuation réglable ($k_d$), du produit d'une composante $\alpha$ de la transformation vectorielle des courants de capacité de filtre ($i_{cfss}$) des filtres LCL (3) par la composante $\alpha$ de la transformation vectorielle des courants ($i_{fi\alpha}$) de borne de phase et du produit de la composante $\beta$ de la transformation vectorielle des courants de capacité de filtre ($i_{Cf\beta}$) des filtres LCL (3) par la composante $\beta$ de la transformation vectorielle des courants de bornes de phase ($i_{fi\beta}$),

**en ce que** la valeur ($d_Q$) de puissance réactive d'hystérésis est formée au moyen d'un deuxième régulateur d'hystérésis (17) à partir de la valeur de différence de puissance réactive ($Q_{diff}$),

**en ce que** la valeur ($Q_{diff}$) de différence de puissance réactive est formée de la soustraction de la valeur réactive estimée ($Q$) et de valeur de puissance réactive d'atténuation ($Q_d$) de la valeur de puissance réactive de référence ($Q_{ref}$), la valeur de puissance réactive d'atténuation ($Q_d$) étant formée de la différence, pondérée par le facteur réglable d'atténuation ($k_d$), entre le produit de la composante $\beta$ de la transformation vectorielle des courants de capacité de filtre ($i_{Cf\beta}$) des filtres LCL (3) par la composante $\alpha$ de la transformation vectorielle des courants de borne de phase ($i_{fi\alpha}$) et le produit de la composante $\alpha$ de la transformation vectorielle des courants de capacité de filtre ($i_{Cf\beta}$) des filtres LCL (3) par la composante $\beta$ de la transformation vectorielle des courants de bornes de phase ($i_{fi\beta}$).

2.  Procédé selon la revendication 1, **caractérisé en ce que** la valeur estimée de la puissance active ($P$) et la valeur estimée de la puissance réactive ($Q$) sont toutes deux formées de la composante $\alpha$ de la transformation vectorielle des courants de sortie de filtre ($i_{fg\alpha}$), de la composante $\beta$ de la transformation vectorielle des courants de sortie de filtre ($i_{fg\beta}$), de la composante $\alpha$ de la transformation vectorielle des flux de sortie de filtre ($\psi_{L\alpha}$) et de la composante $\beta$ de la transformation vectorielle des flux de sortie de filtre (($\psi_{L\beta}$).

3.  Procédé selon la revendication 2, **caractérisé en ce que** la composante $\alpha$ de la transformation vectorielle des flux de sortie de filtre ($\psi_{L\alpha}$) est formée de la composante $\alpha$ de la transformation vectorielle des flux estimés de capacité de filtre ($\psi_{cf\alpha}$) et de la composante $\alpha$ de la transformation vectorielle des courants de sortie de filtre ($i_{fg\alpha}$) et

**en ce que** la composante $\beta$ de la transformation vectorielle des flux de sortie de filtre ($\psi_{L\beta}$) est formée de la composante $\beta$ de la transformation vectorielle des flux estimés de capacité de filtre ($\psi_{Cf\beta}$) et de la composante $\beta$ de la transformation vectorielle des courants de sortie de filtre ($i_{fg\beta}$).

4.  Procédé selon la revendication 3, **caractérisé en ce que** la composante $\alpha$ de la transformation vectorielle des flux estimés de capacité de filtre ($\psi_{Cf\alpha}$) est formée de la valeur instantanée de tension continue ($U_{dc}$) d'un accumulateur capacitif d'énergie (19) relié à l'unité de convertisseur (1), du signal de commande ($S$) et de la composante $\alpha$ de la transformation vectorielle des courants de bornes de phase ($i_{fi\alpha}$) et

**en ce que** la composante $\beta$ de la transformation vectorielle des flux estimés de capacité de filtre ($\psi_{Cf\beta}$) est formée de la valeur instantanée de tension continue ($U_{dc}$) de l'accumulateur capacitif d'énergie (19) relié à l'unité du convertisseur (1), du signal de commande ($S$) et de la composante de la transformation vectorielle des courants de bornes de phase ($i_{fi\beta}$).

5.  Procédé selon les revendications 3 ou 4, **caractérisé en ce que** pour former la valeur de différence de puissance réactive ($Q_{diff}$), on ajoute de plus une valeur de puissance réactive de compensation ($Q_{comp}$), la valeur de puissance réactive de compensation ($Q_{comp}$) étant formée par filtrage passe-bas d'une valeur estimée de la puissance réactive de capacité de filtre ($Q_{cf}$).

6.  Procédé selon la revendication 5, **caractérisé en ce que** la valeur estimée de la puissance réactive de capacité de filtre ($Q_{cf}$) est formée de la composante $\alpha$ de la transformation vectorielle des courants de capacité de filtre ($i_{Cf\alpha}$), de la composante $\beta$ de la transformation vectorielle des courants de capacité de filtre ($i_{cf\beta}$), de la composante $\alpha$ de la transformation vectorielle des flux estimés de capacité de filtre ($\psi_{Cf\alpha}$) et de la composante $\beta$ de la transformation vectorielle des flux estimés de capacité de filtre ($\psi_{Cf\beta}$).

7.  Procédé selon l'une des revendications 3 à 6, **caractérisé en ce que** pour former la valeur de différence de puissance active ($P_{diff}$), on ajoute de plus au moins une valeur de puissance active d'harmoniques de compensation ($P_h$) de l'oscillation de base des courants de sortie de filtre ($i_{fg1}$, $i_{fg2}$, $i_{fg3}$) et **en ce que** pour former la valeur de différence de puissance réactive ($Q_{diff}$), on ajoute de plus au moins une valeur de puissance réactive d'harmoniques de compensation ($Q_h$) de l'oscillation de base des courants de sortie de filtre ($i_{fg1}$, $i_{fg2}$, $i_{fg3}$).

8.  Procédé selon la revendication 7, **caractérisé en ce que** la valeur de puissance active des harmonique de compensation ($P_h$) et la valeur de puissance réactive des harmoniques de compensation ($Q_h$) sont formées respectivement de la composante $\alpha$ de la transformation vectorielle des courants de sortie de filtre ($i_{fg\alpha}$), de la composante $\beta$ de la transformation vectorielle des courants de sortie de filtre ($i_{fg\beta}$), de la composante $\alpha$ de la transformation vec-

torielle des flux de sortie de filtre ($\psi_{L\alpha}$), de la composante β de la transformation vectorielle des flux de sortie de filtre ($\psi_{L\beta}$) et de l'angle d'oscillation de base ($\omega_t$) de l'oscillation de base des courants de sortie de filtre ($i_{fg1}$, $i_{fg2}$, $i_{fg3}$).

9. Dispositif en vue de la mise en oeuvre d'un procédé de gestion d'un circuit convertisseur, le circuit convertisseur comprenant :

   une unité de convertisseur (1) dotée de plusieurs commutateurs de puissance asservis à semi-conducteur et un filtre LCL (3) raccordé à chaque borne de phase (2) de l'unité de convertisseur (1) et
   un dispositif de régulation (4) qui sert à former une valeur ($d_p$) de puissance active d'hystérésis, d'une valeur ($d_Q$) de puissance réactive d'hystérésis et d'un secteur de flux sélectionné ($\theta_n$), lequel dispositif de régulation (5) est relié aux commutateurs de puissance asservis à semi-conducteur pour former un signal de commande (S),

   **caractérisé en ce que**

   le dispositif de régulation (4) comprend :
   une première unité de calcul (6) qui forme la valeur de puissance active d'hystérésis ($d_p$), la valeur de puissance réactive d'hystérésis ($d_Q$) et le secteur de flux sélectionné ($\theta_n$),
   la première unité de calcul (6) présentant un premier régulateur d'hystérésis (16) qui forme la valeur de puissance active d'hystérésis ($d_p$) à partir d'une valeur de différence de puissance active ($P_{diff}$), un deuxième régulateur d'hystérésis (17) qui forme la valeur de puissance réactive d'hystérésis ($d_Q$) à partir d'une valeur de différence de puissance réactive ($Q_{diff}$) et un classificateur vectoriel (18) qui forme le secteur de flux sélectionné ($\theta_n$),
   un premier additionneur (7) qui forme la valeur de différence de puissance active ($P_{diff}$) en soustrayant une valeur estimée de la puissance active (P) et une valeur de puissance active d'atténuation ($P_d$) d'une valeur de puissance active de référence ($P_{ref}$),
   un deuxième additionneur (8) qui forme la valeur de différence de puissance réactive ($Q_{diff}$) en soustrayant une valeur estimée de puissance réactive (Q) et une valeur de puissance réactive d'atténuation ($Q_d$) d'une valeur de puissance réactive de référence ($Q_{ref}$),
   une deuxième unité de calcul (9) qui forme la valeur de puissance active d'atténuation ($P_d$) et la valeur de puissance réactive d'atténuation ($Q_d$), la valeur de puissance active d'atténuation ($P_d$) étant formée de la somme, pondérée par un facteur ajustable d'atténuation ($k_d$), du produit de la composante α de la transformation vectorielle des courants de capacité de filtre ($i_{Cf\alpha}$) des filtres LCL (3) par la composante α de la transformation vectorielle des courants de borne de phase ($i_{fi\alpha}$) et du produit de la composante β de la transformation vectorielle des courants de capacité de filtre ($i_{Cf\beta}$) des filtres LCL (3) par la composante β de la transformation vectorielle des courants de borne de phase ($i_{fi\beta}$),
la valeur de puissance réactive d'atténuation ($Q_d$) étant formée de la différence, pondérée par un facteur ajustable d'atténuation ($k_d$), du produit de la composante β de la transformation vectorielle des courants de capacité de filtre ($i_{Cf\beta}$) des filtres LCL (3) par la composante α de la transformation vectorielle des courants de borne de phase ($i_{fi\alpha}$) et du produit de la composante α de la transformation vectorielle des courants de capacité de filtre ($i_{cf\alpha}$) des filtres LCL (3) par la composante β de la transformation vectorielle des courants de borne de phase ($i_{fi\beta}$).

10. Dispositif selon la revendication 9, **caractérisé en ce que** le dispositif de régulation (4) présente une troisième unité de calcul (10) qui forme la valeur estimée de la puissance active (P) et la valeur estimée de la puissance réactive (Q) respectivement à partir de la composante α de la transformation vectorielle des courants de sortie de filtre ($i_{fg\alpha}$), de la composante β de la transformation vectorielle des courants de sortie de filtre ($i_{fg\beta}$), de la composante α de la transformation vectorielle des flux de sortie de filtre ($\psi_{L\alpha}$) et de la composante β de la transformation vectorielle des flux de sortie de filtre ($\psi_{L\beta}$).

11. Dispositif selon la revendication 10, **caractérisé en ce que** le dispositif de régulation (4) présente une quatrième unité de calcul (11) qui forme la composante α de la transformation vectorielle des flux de sortie de filtre ($\psi_{L\alpha}$) et la composante β de la transformation vectorielle des flux de sortie de filtre ($\psi_{L\beta}$), la composante α de la transformation vectorielle des flux de sortie de filtre ($\psi_{L\alpha}$) étant formée de la composante α de la transformation vectorielle des flux estimés de capacité de filtre ($\psi_{Cf\alpha}$) et de la composante α de la transformation vectorielle des courants de sortie de filtre ($i_{fg\alpha}$), la composante β de la transformation vectorielle des flux de sortie de filtre ($\psi_{L\beta}$) étant formée de la composante β de la transformation vectorielle des flux estimés de capacité de filtre ($\psi_{Cf\beta}$) et de la composante β de la transformation vectorielle des courants de sortie de filtre ($i_{fg\beta}$).

12. Dispositif selon la revendication 11, **caractérisé en ce que** le dispositif de régulation (4) présente une cinquième unité de calcul (12) qui forme la compo-

sante $\alpha$ de la transformation vectorielle des flux estimés de capacité de filtre ($\psi_{cf\alpha}$) et la composante $\beta$ de la transformation vectorielle des flux estimés de capacité de filtre ($\psi_{Cf\beta}$),

la composante $\alpha$ de la transformation vectorielle des flux estimés de capacité de filtre ($\psi_{Cf\alpha}$) étant formée de la valeur instantanée de la tension continue ($U_{dc}$) d'un accumulateur capacitif d'énergie (19) raccordé à l'unité de convertisseur (1), du signal de commande (S) et de la composante $\alpha$ de la transformation vectorielle des courants de borne de phase ($i_{fi\alpha}$) et la composante $\beta$ de la transformation vectorielle des flux estimés de capacité de filtre ($\psi_{Cf\beta}$) étant formée de la valeur instantanée de la tension continue ($U_{dc}$) de l'accumulateur capacitif d'énergie (19) relié à l'unité de convertisseur (1), du signal de commande (S) et de la composante $\beta$ de la transformation vectorielle des courants de borne de phase ($i_{fi\beta}$).

**13.** Dispositif selon les revendications 11 ou 12, **caractérisé en ce qu'**une valeur de puissance réactive de compensation ($Q_{comp}$) est appliquée au deuxième additionneur (8) pour former la valeur de différence de puissance réactive ($Q_{diff}$), la valeur de puissance réactive de compensation ($Q_{comp}$) étant formée par filtrage passe-bas d'une valeur estimée de la puissance réactive ($Q_{Cf}$) de capacité de filtre au moyen d'un passe-bas (15).

**14.** Dispositif selon la revendication 13, **caractérisé en ce que** le dispositif de régulation (4) présente une sixième unité de calcul (13) qui forme la valeur estimée de la puissance réactive de capacité de filtre ($Q_{Cf}$) à partir de la composante $\alpha$ de la transformation vectorielle des courants de capacité de filtre ($i_{Cf\alpha}$), de la composante $\beta$ de la transformation vectorielle des courants de capacité de filtre ($i_{Cf\beta}$), de la composante $\alpha$ de la transformation vectorielle des flux estimés de capacité de filtre ($\psi_{Cf\alpha}$) et de la composante $\beta$ de la transformation vectorielle des flux estimés de capacité de filtre ($\psi_{Cf\beta}$).

**15.** Dispositif selon l'une des revendications 11 à 14, **caractérisé en ce qu'**au moins une valeur de puissance active des harmoniques de compensation ($P_h$) de l'oscillation de base des courants des sorties de filtre ($i_{fg1}$, $i_{fg2}$, $i_{fg3}$) est appliquée au premier additionneur (7) qui forme la valeur de différence de puissance active ($P_{diff}$) et **en ce qu'**au moins une valeur de puissance réactive des harmoniques de compensation ($Q_h$) de l'oscillation de base des courants de sortie de filtre ($i_{fg1}$, $i_{fg2}$, $i_{fg3}$) est appliquée au deuxième additionneur (7) qui forme la valeur de différence de puissance réactive ($Q_{diff}$).

**16.** Dispositif selon la revendication 15, **caractérisé en ce que** le dispositif de régulation (4) présente une septième unité de calcul (14) qui forme la valeur de puissance active des harmoniques de compensation ($P_h$) et la valeur de puissance réactive des harmoniques de compensation ($Q_h$), respectivement à partir de la composante $\alpha$ de la transformation vectorielle des courants de sortie de filtre ($i_{fg\alpha}$), de la composante $\beta$ de la transformation vectorielle des courants de sortie de filtre ($i_{fg\beta}$), de la composante $\alpha$ de la transformation vectorielle des flux de sortie de filtre ($\psi_{L\alpha}$), de la composante $\beta$ de la transformation vectorielle des flux de sortie de filtre ($\psi_{L\beta}$) et de l'angle d'oscillation de base ($\omega_t$) de l'oscillation de base des courants de sortie de filtre ($i_{fg1}$, $i_{fg2}$, $i_{fg3}$).

**Fig. 1**

Fig. 2

Fig. 4

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **W. KOCZARA ; J. MATRASZEK.** Clean Reactive Power Compensator. *IEEE Annual Conf. of Industrial Electronics Society, IECON-2002,* November 2002, 2951-2956